# EUROPÄISCHE PATENTSCHRIFT

(11) **EP 3 195 766 B1**
(45) Veröffentlichungstag und Bekanntmachung des Hinweises auf die Patenterteilung: **09.01.2019**
(21) Anmeldenummer: 16197485.2
(22) Anmeldetag: 07.11.2016
(51) Int. Cl.: A47J 31/36, A47J 31/44

(54) **GETRÄNKEZUBEREITUNGSVORRICHTUNG, SYSTEM SOWIE BETRIEBSVERFAHREN**
BEVERAGE PREPARATION DEVICE, SYSTEM AND METHOD OF OPERATION
DISPOSITIF DE PRÉPARATION DE BOISSONS, SYSTÈME ET PROCÉDÉ DE FONCTIONNEMENT

(30) Priorität: 25.01.2016 DE 102016101223
(43) Veröffentlichungstag der Anmeldung: 26.07.2017
(73) Patentinhaber: Eugster/Frismag AG, 8580 Amriswil (CH)
(72) Erfinder: Riessbeck, Herr Wolfgang, 8597 Landschlacht (CH); Peyrot, Pascal, 9402 Mörschwil (CH); Salomon, Kai, 78315 Liggeringen-Radolfzell (DE)
(74) Vertreter: Patentanwälte Behrmann Wagner PartG mbB

(56) Entgegenhaltungen:
- EP-A1- 2 409 608
- WO-A1-2014/056730
- WO-A1-2015/082662
- WO-A1-2016/005417
- CN-U- 204 427 711

## Beschreibung

Die Erfindung betrifft eine Getränkezubereitungsvorrichtung gemäß dem Oberbegriff des Anspruchs 1 zum Herstellen von Getränken aus Getränkesubstratkapseln, mit mehreren Funktionseinheiten, umfassend eine, Wasserversorgungsmittel, insbesondere eine Wasserpumpe aufweisende, Injektionseinrichtung zum Injizieren von Wasser in eine Getränkesubstratkapsel zur Getränkeerzeugung, wobei die Injektionseinrichtung eine Injektionskammer mit einem ersten Injektionskammerteil und einem zum Öffnen und Schließen der Injektionskammer relativ zu dem, bevorzugt wannenförmigen und/oder ortsfesten ersten Injektionskammerteil manuell oder motorisch verstellbaren, zweiten Injektionskammerteil, aufweist, und wobei der Injektionskammer signalleitend mit Steuermitteln zum Ansteuern zumindest einer der Funktionseinheiten verbundene Sensormittel umfassende Detektionsmittel zugeordnet sind, mit denen detektierbar ist, ob sich in der, bevorzugt geschlossenen, Injektionskammer eine Getränkesubstratkapsel befindet oder nicht. Die Herstellung des Getränks erfolgt dabei mit der Getränkezubereitungsvorrichtung durch Auflösen von Getränkesubstrat, beispielsweise Granulat oder Sirup und/oder Auslaugen des Getränkesubstrates, beispielsweise von Kaffeemehl durch Beaufschlagung, bevorzugt mit Hilfe von fakultativen Heizmitteln erhitztem und/oder alternativ von fakultativen Kühlmitteln gekühltem Wasser. Die Detektionsmittel sind derart ausgebildet und wirken mit den Steuermitteln zusammen, dass mit diesen zwischen einer zulässigen, einen (vorgegebenen, insbesondere kapselmaschinenspezifischen) Kapselgeometrieparameter, nämlich eine Getränkesubstratkapsellänge (gemessener Abstand zwischen Deckel und Boden), erfüllenden Getränkesubstratkapsel und einer unzulässigen, die vorgegebene Getränkesubstratkapsellänge und ggf. mindestens einen weiteren Kapselgeometrieparameter nicht erfüllenden, in der Injektionskammer befindlichen Getränkesubstratkapsel, bevorzugt während eines Schließvorgangs der Injektionskammer, unterschieden werden kann.

Ferner betrifft die Erfindung ein System mit einer derartigen Getränkezubereitungsvorrichtung und einer zulässigen, d.h. mindestens einen vorgegebenen Kapselgeometrieparameter erfüllenden Getränkesubstratkapsel und/oder einer unzulässigen, den mindestens einen Kapselgeometrieparameter nicht erfüllenden Getränkesubstratkapsel gemäß Anspruch 10.

Ferner betrifft die Erfindung ein Betriebsverfahren zum Betreiben einer erfindungsgemäßen Getränkezubereitungsvorrichtung gemäß dem Oberbegriff des Anspruchs 11.

Aus der WO 2013/042041 A1 ist eine Kapsel-Getränkezubereitungsvorrichtung bekannt, die abschnittsweise in der Injektionskammer angeordnete Detektionsmittel umfasst, mit denen detektierbar ist, ob sich in der Detektionskammer eine Getränkesubstratkapsel befindet oder nicht.

Ferner ist aus der WO 2014/056730 A1 eine weitere Kapsel-Getränkezubereitungsvorrichtung bekannt.

Aus der WO 2016/005417 A1 ist eine Getränkezubereitungsvorrichtung in Form einer Kapselmaschine bekannt, mit der ein Kapseltyp identifizierbar ist, um in Abhängigkeit des darin befindlichen Getränkesubstrates ein bestimmtes Brühprogramm zu starten. Die bekannte Kapselmaschine ist nicht dazu ausgelegt zulässige von unzulässigen Kapseln zu unterscheiden. Dies gilt auch für die aus der AU 2012228386 B2 bekannte Kapselmaschine, die in der Lage ist, die Leitfähigkeit bzw. einen elektrischen Widerstand einer Kapsel zu messen, um die im Gerät befindliche Kapsel im Hinblick auf das darin befindliche Substrat zu identifizieren, um dann ein passendes Brühprogramm zu starten.

In der Praxis besteht das Problem, dass Kapseln mit unterschiedlichsten Kapsellängen, häufig auch von demselben Hersteller, existieren, die in die Injektionskammer passen bzw. in diese einführbar sind. Wird in eine Injektionskammer benutzerseitig beispielsweise eine nicht für den Maschinentyp bestimmte, d.h. unzulässige Getränkesubstratkapsel eingeführt, die sich hinsichtlich der Getränkesubstratkapsellänge von einer zulässigen, d.h. für diese Getränkezubereitungsvorrichtung bestimmte Getränkesubstratkapsel unterscheidet, beispielsweise indem die unzulässige Kapsel zu kurz ist, d.h. einen kürzeren Abstand zwischen Kapselboden und Kapseldeckel aufweist als eine zulässige Kapsel, besteht das Problem, dass eine solche unzulässige Kapsel mangels ausreichender axialer Abstützung bei aus der Wasserinjektion resultierender Druckbeaufschlagung in der Injektionskammer platzen und diese somit verunreinigen kann.

Ausgehend von dem vorgenannten Stand der Technik liegt der Erfindung daher die Aufgabe zugrunde, eine Getränkezubereitungsvorrichtung (Kapselmaschine) sowie ein eine solche umfassendes System und ein Betriebsverfahren für eine solche Getränkezubereitungsvorrichtung anzugeben, mit den Fehlbedienungen sicher vermieden werden. Insbesondere soll die Verarbeitung unzulässiger Getränkesubstratkapseln sicher verhindert werden.

Diese Aufgabe wird hinsichtlich der Getränkezubereitungsvorrichtung mit den Merkmalen des Anspruchs 1 gelöst.

Hinsichtlich des Systems wird die Aufgabe mit den Merkmalen des Anspruchs 10 und hinsichtlich des Verfahrens mit den Merkmalen des Anspruchs 11 gelöst, d.h. bei einem gattungsgemäßen Betriebsverfahren dadurch, dass von den Steuermitteln durch Zusammenwirken mit den Detektionsmitteln, insbesondere während eines Schließvorgangs zum Schließen der Injektionskammer, festgestellt wird, dass es sich bei der in der Injektionskammer befindlichen Getränkesubstratkapsel um eine zulässige, eine vorgegebene Getränkesubstratkapsellänge und ggf., d.h. fakultativ mindestens einen weiteren Kapselgeometrieparameter erfüllende Getränkesubstratkapsel oder eine unzulässige, den die (vorgegebene) Getränkesubstratkapsellänge und ggf. mindestens einen weiteren Kapselgeometrieparameter nicht erfüllende Getränkesubstratkapsel handelt.

Vorteilhafte Weiterbildungen der Erfindung sind in den Unteransprüchen angegeben. In den Rahmen der Erfindung fallen zumindest zwei von in der Beschreibung, den Ansprüchen und/oder den Figuren offenbarten Merkmalen. Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale auch als vorrichtungsgemäß offenbart gelten und beanspruchbar sein.

Der Erfindung liegt der Gedanke zugrunde, die Detektionsmittel zur Detektion einer in der Injektionskammer befindlichen Getränkesubstratkapsel so weiterzubilden, dass mit diesen nicht nur detektierbar ist, ob sich irgendeine Getränkesubstratkapsel in der Injektionskammer befindet, sondern zudem auch, ob es sich bei der in der Injektionskammer befindlichen Getränkesubstratkapsel um eine zulässige oder eine unzulässige, d.h. nicht für die vorliegende Getränkezubereitungsvorrichtung (Kapselmaschine) bestimmte Getränkesubstratkapsel handelt, da sie einen für die Injektionskammer bzw. die Getränkezubereitungsvorrichtung spezifischen Kapselgeometrieparameter in Form der Getränkesubstratkapsellänge nicht erfüllt, beispielsweise da die unzulässige Gertränkesubstratkapsel eine geringere Länge aufweist als eine zulässige bzw. für einen ordnungsgemäßen Betrieb vorgesehene Getränkesubstratkapsel. Bevorzugt wirken die Steuermittel dabei derart mit den Detektionsmitteln zusammen, dass die Steuermittel dann, wenn eine Getränkesubstratkapsel als zulässig erkannt wird, d.h. in Abhängigkeit der Erkennung mindestens eine Funktionseinheit ansteuern, beispielsweise einen Injektionsprozess durch Ansteuern der Wasserversorgungsmittel starten und/oder Eingabemittel zur wirksamen Eingabe eines Bezugsbefehls freischalten und/oder Signalisierungsmittel, beispielsweise ein Display zur Signalisierung einer zulässigen Kapsel an den Benutzer ansteuern. Zusätzlich oder alternativ ist die Getränkezubereitungsvorrichtung bevorzugt derart ausgebildet, dass die Steuermittel bei Erkennen einer unzulässigen Getränkesubstratkapsel in der Injektionskammer mindestens eine Funktionseinheit der Kapselmaschine ansteuert, beispielsweise Signalisierungsmittel zur Signalisierung, insbesondere Visualisierung einer unzulässigen Getränkesubstratkapsel an den Benutzer und/oder einen fakultativen Antrieb zum automatischen Öffnen und/oder Auswerfen der unzulässigen Getränkesubstratkapsel.

Bevorzugt wirken die, insbesondere in Form von eines softwaregesteuerten Mikrokontrollers vorliegenden Steuermittels derart mit den Detektionsmitteln, insbesondere den signalleitend mit den Steuermitteln verbundenen Sensormitteln zusammen, dass sie das Vorliegen einer nicht zulässigen Getränkesubstratkapsel dadurch bzw. dann erkennen, wenn sie innerhalb einer vorgegebenen Zeitspanne, insbesondere nach einem bestimmten Zeitpunkt, insbesondere einem Schließzeitpunkt der Injektionskammer oder dem Erkennen des Vorhandenseins (irgendeiner) Getränkesubstratkapsel in der Injektionskammer, kein Freigabesensorsignal von den Sensormitteln erhalten hat oder wenn die Sensormittel in einer vorgegebenen Häufigkeit ausgelöst bzw. betätigt werden. In Weiterbildung der Erfindung kann vorgesehen sein, dass mittels der Detektionsmittel die Getränkesubstratkapsel nicht nur auf Erfüllen des (vorgegebenen) Kapselgeometrieparameter der Getränkesubstratkapsellänge sondern mindestens einem weiteren Kapselgeometrieparameter, wie beispielsweise einen Durchmesser, überprüft wird, wobei bevorzugt die Kapsel nur dann als zulässig erkannt und die Steuermittel entsprechend angesteuert werden, wenn sämtliche geforderten Kapselgeometrieparameter vorgegeben erfüllt werden.

Die erfindungsgemäße Getränkezubereitungsvorrichtung bzw. das erfindungsgemäße Betriebsverfahren sind also in der Lage Getränkesubstratkapseln zu detektieren bzw. identifizieren, die einen vorgegebenen Getränkesubstratkapselgeometrieparameter, nämlich eine Kapsellänge nicht erfüllen. Ggf. sind die erfindungsgemäße Getränkezubereitungsvorrichtung bzw. das erfindungsgemäße Betriebsverfahren in der Lage, zusätzlich zur Getränkesubstratkapsellänge zu definieren, ob die Kapseln einen senkrecht zur Kapsellänge gemessenen Kapseldurchmesser oder mindestens einen anderen oder zusätzlichen Kapselgeometrieparameter erfüllen. Bevorzugt umfassen die Detektionsmittel also Abmessungsbestimmungsmittel, insbesondere Längen- und/oder Breitenbestimmungsmittel zum Detektieren bzw. Erkennen des Erfüllens oder Nicht-Erfüllens mindestens einer Getränkesubstratkapselabmessung.

Insbesondere dann, wenn die Steuermittel den Injektionsprozess nur unter der Bedingung des Erkennens einer zulässigen Getränkesubstratkapsel zulassend bzw. startend oder Eingabemittel freigebend ausgebildet sind, kann die Verarbeitung unzulässiger Getränkesubstratkapseln sicher vermieden werden, ebenso wenn die Steuermittel bei Erkennen einer unzulässigen Kapsel einen Injektionsprozess unterbinden und/oder Eingabemittel sperren und/oder fakultative automatische Auswurfmittel zum selbsttätigen Auswerfen der unzulässigen Getränkesubstratkapsel, insbesondere vor einer Wasserinjektion ansteuern.

Im Hinblick auf die konkrete Ausgestaltung der Detektionsmittel gibt es unterschiedliche Möglichkeiten. Bevorzugt ist es jedenfalls, wenn die Detektionsmittel zumindest abschnittweise in der Injektionskammer angeordnet sind und/oder aktivierbar sind durch einen manuellen und/oder automatischen Schließvorgang der Injektionskammer, bei welchem mindestens eines der Injektionskammerteile auf das weitere Injektionskammerteil zu bewegt wird, beispielsweise manuell, insbesondere mittels eines Hebels und/oder durch translatorisches Verstellen oder alternativ mittels eines, insbesondere elektromotorischen Antriebs.

Eine erste Ausgestaltungsvariante sieht vor, dass die Sensormittel der Detektionsmittel mindestens zwei signalleitend mit den Steuermitteln verbundene Sensoren, beispielsweise zwei Schalt- oder zwei Lichtschranken oder einen Schalter und eine Lichtschranke oder mindestens einen hiervon unterschiedlichen Sensor umfassen, wobei der erste Sensor, insbesondere ein erster Schalter oder eine erste Lichtschranke ausgebildet und angeordnet ist, um das Vorhandensein einer Getränkesubstratkapsel in der Injektionskammer zu detektieren, insbesondere unabhängig von ihrer Zulässigkeit, d.h. des Erfüllens zumindest einer Getränkesubstratkapsellängenvorgabe, wobei dieser erste Sensor bei Detektion ein Sensorsignal ausgibt "Vorhandensein einer (beliebigen) Kapsel in der Injektionskammer erkannt".

Dieser erste Sensor kann beispielsweise so ausgebildet und angeordnet werden, dass dieser auslöst bzw. betätigt wird, wenn irgendeine Kapsel sich in der Injektionskammer befindet, beispielsweise indem diese Kapsel bereits zu Beginn eines Schließvorgangs in Wechselwirkung mit dem ersten Sensor tritt. Zusätzlich zu dem ersten Sensor ist ein zweiter Sensor, beispielsweise eine Lichtschranke oder ein Schalter vorgesehen, der derart, vorzugsweise beabstandet, von dem ersten Sensor angeordnet ist, dass dieser nur dann auslösbar bzw. betätigbar ist, wenn die Getränkesubstratkapsel zulässig ist, d.h. den geforderten Kapselgeometrieparameter, beispielsweise eine geforderte Kapsellänge erfüllt, d.h. der Kapselgeometrieparameter muss erfüllt sein, um den Sensor zu aktivieren. Dieser zweite Sensor sendet bei Auslösung bzw. Betätigung, d.h. des Erfüllens des Kapselgeometrieparameters, ein bevorzugt als Freigabesensorsignal dienendes zweites Sensorsignal "Kapselgeometrieparameter erfüllt". Auch ist es möglich, dass wenn nicht innerhalb einer definierten Zeitspanne, beispielsweise nach Erhalt des erstens Sensorsignals und/oder dem Beginn eines Schließvorgangs kein zweites Sensorsignal ausgesendet wird, die Steuermittel eine unzulässige Getränkesubstratkapsel erkennen.

Der erste und/oder der zweite Sensor können derart ausgebildet und angeordnet sein, dass dieser bzw. diese durch unmittelbare Wechselwirkung mit der Getränkesubstratkapsel auslösbar bzw. betätigbar sind.

Bevorzugt ist es jedoch, wenn sie derart angeordnet sind, dass diese mittelbar von der Getränkesubstratkapsel betätigbar sind, insbesondere indem die Getränkesubstratkapsel, wie später noch erläutert wird, beim Schließvorgang gegen ein Anschlagelement verfährt und dieses in Abhängigkeit des Erfüllens oder Nichterfüllens des Kapselgeometrieparameters unterschiedlich weit ausgelenkt, insbesondere translatorisch verschoben wird.

Alternativ zu dem Vorsehen eines ersten und eines zweiten, wie zuvor ausgebildeten und angeordneten Sensors, umfassen die signalleitend mit dem Steuermitteln verbundenen Sensormittel einen Mehrfachbetätigungs-Sensor, beispielsweise eine Lichtschranke oder einen, insbesondere mechanischen Schalter, beispielsweise einen Mikroschalter, wobei dieser Mehrfachbetätigungs-Sensor beim Schließen der Injektionskammer durch unmittelbare oder mittelbare Wechselwirkung mit einer Getränkesubstratkapsel in Abhängigkeit des Erfüllens oder Nichterfüllens des mindestens einen Kapselgeometrieparameters unterschiedlich oft betätigbar ist. Anders ausgedrückt wird der Mehrfach-Betätigungsschalter bei Erfüllen des Kapselgeometrieparameters öfter oder weniger oft, insbesondere bei einem Schließvorgang der Injektionskammer, betätigt als bei Nichterfüllung des Kapselgeometrieparameters. Besonders zweckmäßig ist es dabei, wenn dem Mehrfachbetätigungs-Sensor Zählmittel der Steuermittel zugeordnet sind, mit denen, insbesondere bei einem Injektionskammerschließvorgang, die Anzahl der Betätigungen des Mehrfach-Betätigungssensors zählbar sind und dass die Steuermittel in Abhängigkeit der Anzahl der Betätigungen eine Getränkesubstratkapsel als zulässig oder unzulässig identifizieren. So ist es beispielsweise denkbar und bevorzugt, wenn eine zulässige, beispielsweise ausreichend lange Getränkesubstratkapsel aufgrund einer weiteren Auslenkung eines Anschlagelementes beim Schließvorgang der Injektionskammer den Mehrfachbetätigungs-Sensor mittelbar öfter betätigt als eine beispielsweise zu kurze Getränkesubstratkapsel, die ein entsprechendes Anschlagelement aufgrund ihrer kürzeren Ausgestaltung weniger weit auslenkt.

Bevorzugt werden die vorerwähnten Zählermittel in Abhängigkeit eines vorgegebenen Betriebszustandes, insbesondere eines Sensorsignals immer wieder zurückgesetzt, beispielsweise beim Erkennen eines Öffnungszustandes der Injektionskammer und/oder des Beginns eines Injektionsprozesses bzw. Wasserförderprozesses oder dergleichen Betriebszustand bzw. Sensorsignals.

Ganz besonders bevorzugt ist es, wenn die Detektionsmittel zur Wechselwirkung mit den Sensormitteln, also beispielsweise dem ersten und dem zweiten Sensor und/oder dem Mehrfachbetätigungs-Sensor ein Schaltnockenelement umfassen, wobei dieses derart ausgebildet und angeordnet ist, dass durch den Schließvorgang der Injektionskammer eine Relativbewegung zwischen dem Schaltnockenelement und den Sensormitteln stattfindet, wobei das entweder aktiv durch den Schließvorgang relativ zu den Sensormitteln verstellte oder ortsfeste Schaltnockenelement mittelbar oder unmittelbar mit den Sensormitteln zu deren Betätigung zusammenwirkt.

Ganz besonders bevorzugt ist es dabei, wenn dem Schaltnockenelement Abtastmittel zugeordnet sind, die in Abhängigkeit der Relativposition zu dem Schaltnockenelement aufgrund der Schaltnockenelementgeometrie unterschiedlich weit, vorzugsweise winklig zu einer Schließrichtung der Injektionskammer auslenkbar, insbesondere verschwenkbar oder translatorisch verstellbar sind, insbesondere entgegen der Kraft einer Rückstellfeder oder zwangsgeführt um somit bevorzugt unmittelbar (alternativ mittelbar) mit den Sensormitteln zu deren Betätigung bzw. Auslösung) zusammenzuwirken.

Wie bereits angedeutet ist es besonders zweckmäßig, wenn sich die Sensormittel außerhalb der Injektionskammer befinden, jedoch ein Anschlagelement, insbesondere ein Injektionskammerboden in der Injektionskammer, wobei das Anschlagelement beim Schließen der Injektionskammer durch bevorzugt unmittelbare Wechselwirkung mit der Getränkesubstratkapsel auslenkbar ist, insbesondere unterschiedlich weit in Abhängigkeit des Erfüllens oder Nicht-Erfüllens des Kapselgeometrieparameters, nämlich zumindest der Getränkesubstratkapsellängenvorgabe.

Bevorzugt trägt das aus der Injektionskammer herausgeführte Anschlagelement außerhalb der Injektionskammer ein vorerwähntes Schaltnockenelement oder die Sensormittel.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: eine ausschnittsweise Darstellung einer Kapselmaschine mit geöffneter Injektionskammer,
- Fig. 2: einen zu Fig. 1 korrespondierenden Zustand von der Injektionskammer zugeordneten Detektionsmittel,
- Fig. 3: eine geschlossene Injektionskammer mit einer darin befindlichen, zulässigen Getränkesubstratkapsel,
- Fig. 4: einen mit Fig. 3 korrelierenden Zustand der Detektionsmittel,
- Fig. 5 bis Fig. 8: unterschiedliche Betriebszustände der Detektionsmittel.

In den Figuren sind gleiche Elemente und Elemente mit der gleichen Funktion mit den gleichen Bezugszeichen gekennzeichnet.

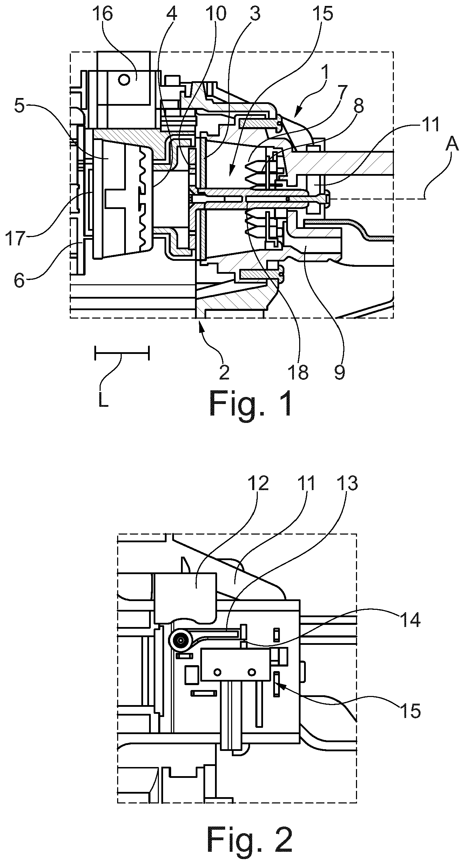

In Fig. 1 ist ausschnittsweise eine nach dem Konzept der Erfindung ausgebildete Getränkezubereitungsvorrichtung 1 (Kapselmaschine) gezeigt. Zu erkennen ist eine Injektionseinrichtung 2, umfassend eine Injektionskammer 3, die mit Hilfe von nicht gezeigten Wasserversorgungsmitteln zum Injizieren von Wasser in eine Getränkesubstratkapsel versorgbar ist.

In Fig. 1 ist insbesondere ein Einwurfschacht 4 gezeigt, durch den hindurch eine Getränkesubstratkapsel 5 zuführbar ist, in dem konkreten Ausführungsbeispiel auf ein zweites Injektionskammerteil 6, welches zum Schließen der Injektionskammer 3, hier beispielhaft manuell über einen nicht gezeigten Hebelmechanismus oder alternativ über einen Antrieb relativ zu einem wannenartigen, ortsfesten ersten Injektionskammerteil 7, hier beispielhaft zusammen mit der Getränkesubstratkapsel 5, verstellbar ist.

Zu erkennen sind im ersten Injektionskammerteil 7 angeordnete Aufstechmittel 8 zum Aufstechen der Getränkesubstratkapsel 5 bei einem Schließ- und/oder Injektionsvorgang.

Fertiges Getränk kann über einen Fluidausgang 9 aus der Injektionskammer zu einem Auslauf der Getränkezubereitungsvorrichtung 1 geleitet werden.

Zu erkennen ist, dass die Injektionskammer 3 ein in der Injektionskammer 3 angeordnetes Anschlagelement 10 aufweist, welches mit Durchgangsöffnungen versehen ist. Wird das zweite Injektionskammerteil 6 entlang einer Verstellachse A, hier beispielhaft translatorisch auf das erste Injektionskammerteil 7 verstellt, gelangt die Getränkesubstratkapsel 5 in Anlagekontakt zu dem Anschlagelement 10 und bewegt dieses entlang der Verstellachse A in der Zeichnungsebene nach rechts. Zusammen mit dem Anschlagelement 10, welches hier beispielhaft translatorisch entlang der Verstellachse A verschiebbar geführt ist, wird ein außerhalb der Injektionskammer 3 angeordneter Träger 11 (Rahmen) bewegt, an dem ein später noch zu erläuterndes und in Fig. 2 gezeigtes Schaltnockenelement 12 angeordnet ist, welches relativ zu Abtastmitteln 13 und von hier beispielhaft als Mehrfachbetätigungssensor ausgebildeten Sensormitteln 14 der Detektionsmittel 15 verstellbar ist, um das Vorhandensein sowie die Zulässigkeit oder Unzulässigkeit einer Getränkesubstratkapsel 5 zu detektieren.

In dem gezeigten Ausführungsbeispiel handelt es sich bei der Getränkesubstratkapsel 5 um eine zulässige Getränkesubstratkapsel deren von einem Kapselboden 16 bis zu einem Kapseldeckel 17 gemessene Länge L (erfindungsgemäßer Kapselgeometrieparameter) den Anforderungen entspricht. Bei gegebener Länge L wird das Anschlagelement 10 definiert weit entlang der Verstellachse A bewegt und damit das Schaltnockenelement 12 definiert weit relativ zu den Abtastmitteln 13 und den Sensormitteln.

Ist die Getränkesubstratkapsel 5 zu kurz, weist sie also eine geringere Länge L auf und ist somit unzulässig, wird das Anschlagelement 10 weniger weit entlang der Verstellachse A verstellt, was, wie später noch erläutert werden wird, mit Hilfe der Steuermittel durch Zusammenwirken mit den Detektionsmitteln detektierbar ist, wobei die Steuermittel dann zwar das Vorhandensein einer Getränkesubstratkapsel erkennen, diese jedoch als unzulässig einstufen.

Betrachtet man nun Fig. 2, ist wiederum das Schaltnockenelement 12, welches mit Hilfe des Trägers 11, der fest mit einer Führungsstange 18 des Anschlagelementes 10 gekoppelt ist. Das Schaltnockenelement 12 weist auf der den Abtastmitteln 13, hier in Form eines verschwenkbar gelagerten Abtastarms zugewandten Seite, hier einer Unterseite eine Hügelstruktur auf, die dafür Sorge trägt, dass die Abtastmittel 13 in Abhängigkeit der Relativposition von Nockenelement zu Abtastermitteln 13 und damit der Einschubtiefe des Anschlagelementes 10 ausgelenkt wird und somit die Sensormittel 14, hier ein Mikroschalter betätigt. Anstelle der Abtastmittel und des Mikroschalters könnte auch eine Lichtschranke mit dem Schaltelement zusammenwirken.

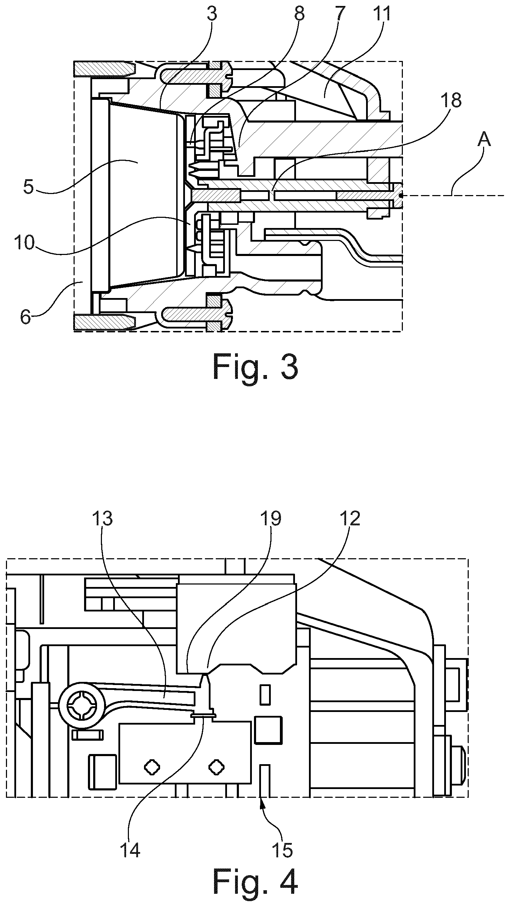

Hieraus resultiert - in Abhängigkeit der Einschubtiefe des Anschlagelementes 10 und damit der Kapsellänge L eine unterschiedliche Anzahl von Betätigungen der Sensormittel 14, wobei die Anzahl von nicht gezeigten Zählmitteln gezählt und in Abhängigkeit der festgestellten Anzahl eine Getränkesubstratkapsel als zulässig oder unzulässig erkennt und dann mindestens eine Funktionseinheit in Abhängigkeit der Bewertung angesteuert wird. In Fig. 3 ist die Injektionskammer 3 geschlossen, das erste Injektionskammerteil liegt dichtend an dem zweiten Injektionskammerteil 6 an. Da es sich um eine zulässige Getränkesubstratkapsel 5 handelt, ist das Anschlagelement 10 maximal weit entlang der Verstellachse A in der Zeichnungsebene nach rechts verstellt, was Einfluss hat auf die Stellung des in Fig. 4 gezeigten Schaltnockenelementes 12 an dessen Kontaktseite 19, hier einer Unterseite das Schaltnockenelement 12 mit einem ortsfesten, jedoch verschwenkbar angeordneten Abtastarm von Abtastmitteln 13 zusammenwirkt.

Alternativ ist es denkbar, auf Abtastmittel 13 zu verzichten, so dass die Sensormittel 14 unmittelbar mit dem Schaltnockenelement zusammenwirken. Auch ist es denkbar, die Sensormittel zusammen mit Abtastmitteln verstellbar relativ zu einem dann ortfesten Nockenelement anzuordnen, wobei auch diese Ausführungsform mit oder ohne Abtastmittel 13 realisierbar ist, wobei für den Fall des Vorsehens der Abtastmittel 13 diese bevorzugt dann zusammen mit den Sensormitteln 14 relativ zu dem Schaltnockenelement 12 verstellt werden.

Zu erkennen ist, dass das Schaltnockenelement 12 soweit in der Zeichnung nach rechts, verglichen mit der Darstellung gemäß Fig. 2, verstellt ist, dass auf dem Weg dorthin die Abtastmittel 13 zweimal in der Zeichnungsebene nach unten ausgelenkt und damit die Sensormittel 14 zweimal betätigt wurden, woran die Steuermittel erkennen, dass es sich bei der eingelegten Getränkesubstratkapsel um eine zulässige Getränkesubstratkapsel handelt. Bei der ersten Betätigung detektieren die Detektionsmittel das Vorhandensein einer Kapsel, während die zweite Auslösung der Sensormittel 14 deren Zulässigkeit signalisiert, was von den Steuermitteln erfasst wird.

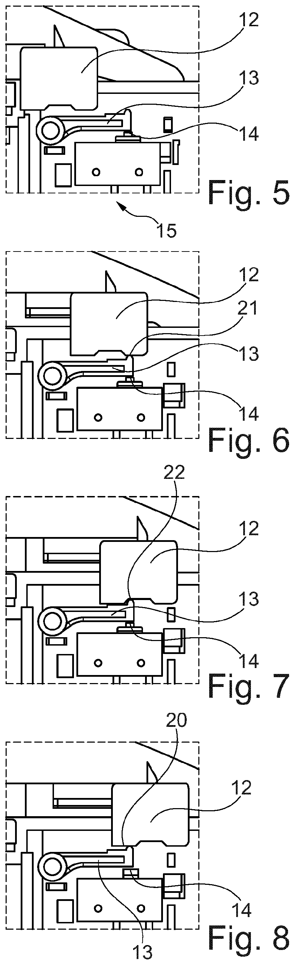

In Fig. 5 ist eine Ausgangsposition der Detektionsmittel 15 bei geöffneter Injektionskammer 3 gezeigt. Die Sensormittel 14 sind nicht betätigt. Die Abtastmittel 13 sind aufgrund einer Feder in einer oberen bzw. von den Sensormitteln 14 wegverstellten Position.

Beginnt nun der Schließvorgang, kommt die Getränkesubstratkapsel 5 in Kontakt mit dem Anschlagelement 10 und verstellt dieses entlang der Verstellachse A, was wiederum in einer Verstellbewegung des Schaltnockenelementes 12 resultiert, was in Fig. 6 gezeigt ist. Die Abtastmittel 13 kommen in Kontakt mit einer ersten Erhebung 21 der Nockengeometrie, wodurch die Abtastmittel 13 in der Zeichnungsebene nach unten auf die Sensormittel 14 verstellt werden und in dem vorliegenden Ausführungsbeispiel hierdurch den Mikroschalter betätigen.

Diese Betätigung wird von den Zählmitteln der Steuermittel gezählt. Die Steuermittel erkennen nun, dass eine (zunächst beliebige) Getränkesubstratkapsel eingelegt wird bzw. wurde.

Bei einer Weiterverstellung der Getränkesubstratkapsel 5 durch Verstellen des zweiten Injektionskammerteils 6 wird der in Fig. 7 gezeigte Zustand erreicht. Hier ist zu erkennen, dass sich die Abtastmittel 13 in einer Vertiefung 22 der Schaltnockenelementoberflächengeometrie befinden, wodurch der Mikroschalter gelöst bzw. geöffnet wird. Da es sich, wie erwähnt, bei der Getränkesubstratkapsel um eine zulässige Getränkesubstratkapsel handelt, wird bei dem weiteren Schließvorgang durch Wechselwirkung der Getränkesubstratkapsel mit den Abtastmitteln das Schaltnockenelement 12 in die in Fig. 8 gezeigte Position verstellt, in der die Abtastmittel 13 in Wechselwirkung gelangen mit einer zweiten Erhebung 20 der Schaltnockenelementgeometrie, was in einer erneuten Betätigung der Sensormittel 14 resultiert. Diese erneute Betätigung wird gezählt, wodurch die Steuermittel erkennen, dass es sich um eine zulässige Kapsel handelt und daraufhin den Injektionsprozess durch Ansteuerung einer Pumpe starten oder Eingabemittel zur Eingabe eines Bezugsbefehls freischalten. Möglich ist auch eine Ausführungsvariante, bei der die Steuermittel, wenn diese nicht innerhalb einer vorgegebenen Zeitspanne eine nochmalige Betätigung der Sensormittel 14 detektieren, eine unzulässige Getränkesubstratkapsel erkennen. Es ist auch eine Ausführungsform mit zwei, insbesondere voneinander beabstandeten Sensoren denkbar, die derart angeordnet sind, dass diese bevorzugt nacheinander betätigbar sind, insbesondere dann, wenn eine zulässige Getränkesubstratkapsel eingelegt wird. Die Betätigung eines der Sensoren unterbleibt, wenn eine unzulässige Getränkesubstratkapsel eingelegt wird. Es wird dann von den Steuermitteln erkannt, dass irgendeine Getränkesubstratkapsel eingelegt wurde, es sich dabei jedoch um eine unzulässige Kapsel handelt, woraufhin beispielsweise eine entsprechende Ausgabe auf einem Display erfolgt und/oder die Ausgabe eines akustischen Signals und/oder die Getränkesubstratkapsel automatisch ausgeworfen wird.

Bezugszeichen:
- 1: Getränkezubereitungsvorrichtung
- 2: Injektionseinrichtung
- 3: Injektionskammer
- 4: Einwurfschacht
- 5: Getränkesubstratkapsel
- 6: zweites Injektionskammerteil
- 7: erstes Injektionskammerteil
- 8: Aufstechmittel
- 9: Fluidausausgang
- 10: Anschlagelement
- 11: Träger
- 12: Schaltockenelement
- 13: Abtastmittel
- 14: Sensormittel
- 15: Detektionsmittel
- 16: Kapselboden
- 17: Kapseldeckel
- 18: Führungsstange
- 19: Kontaktseite
- 20: zweite Erhebung
- 21: erste Erhebung
- 22: Vertiefung

- A: Verstellachse

## Patentansprüche

1. Getränkezubereitungsvorrichtung zum Herstellen von Getränken aus Getränkesubstratkapseln (5), mit mehreren Funktionseinheiten, umfassend eine Wasserversorgungsmittel aufweisende Injektionseinrichtung (2) zum Injizieren von Wasser in eine Getränkesubstratkapsel (5) zur Getränkeerzeugung, wobei die Injektionseinrichtung (2) eine Injektionskammer (3) mit einem ersten Injektionskammerteil (7) und einem zum Öffnen und Schließen der Injektionskammer (3) relativ zu dem ersten Injektionskammerteil (7) verstellbaren zweiten Injektionskammerteil (6) aufweist, wobei der Injektionskammer (3) signalleitend mit Steuermitteln zum Ansteuern zumindest einer der Funktionseinheiten verbundene Sensormittel (14) umfassende, bevorzugt zumindest abschnittsweise in der Injektionskammer (3), weiter bevorzugt im ersten Injektionskammerteil (7) angeordnete, Detektionsmittel (15) zugeordnet sind, mit denen detektierbar ist, ob sich in der, bevorzugt geschlossenen, Injektionskammer (3) eine Getränkesubstratkapsel (5) befindet oder nicht, wobei die Detektionsmittel (15) derart ausgebildet sind und mit den Steuermitteln zusammenwirken, dass mit diesen zwischen einer zulässigen, eine vorgegebene Getränkesubstratkapsellänge erfüllenden Getränkesubstratkapsel (5) und einer unzulässigen, die Getränkesubstratkapsellänge nicht erfüllenden, in der Injektionskammer (3) befindlichen Getränkesubstratkapsel (5) unterscheidbar ist, **dadurch gekennzeichnet,**
**dass** die Detektionsmittel (15) ein in Abhängigkeit des Erfüllens oder nicht Erfüllens der Getränkesubstratkapsellänge unterschiedlich weit auslenkbares Schaltnockenelement (12) zur mittelbaren oder unmittelbaren Wechselwirkung mit den Sensormitteln (14) umfassen und/oder dass die Sensormittel (14) in Abhängigkeit des Erfüllens oder nicht Erfüllens der Getränkesubstratkapsellänge unterschiedlich weit relativ zu einem, bevorzugt ortsfesten, Schaltnockenelement (12) zur mittelbaren oder unmittelbaren Wechselwirkung mit dem Schaltnockenelement (12) auslenkbar sind.

2. Getränkezubereitungsvorrichtung nach Anspruch 1,
**dadurch gekennzeichnet,**
**dass** die Steuermittel eine Getränkesubstratkapsel (5) als unzulässig erkennend ausgebildet sind, wenn die Steuermittel nicht innerhalb einer vorgegeben Zeitspanne ein Freigabesensorsignal von den Sensormitteln (14) erhalten und/oder eine bestimmte Anzahl von Sensormittelsignalen gezählt wird.

3. Getränkezubereitungsvorrichtung nach einem der Ansprüche 1 oder 2,
**dadurch gekennzeichnet,**
**dass** die Steuermittel in Abhängigkeit des Erkennens einer unzulässigen Getränkesubstratkapsel mindestens eine der Funktionseinheiten ansteuernd ausgebildet sind, insbesondere Signalisierungsmittel zur Signalisierung einer falschen Getränkesubstratkapsel ansteuernd und/oder automatische Öffnungsmittel zum automatischen Öffnen der Injektionskammer (3) ansteuernd und/oder Auswurfmittel zum automatischen Auswerfen der unzulässigen Getränkesubstratkapsel (5) ansteuernd und/oder die Eingabemittel zum Verhindern einer wirksamen Bezugsbefehleingabe sperrend ausgebildet sind.

4. Getränkezubereitungsvorrichtung nach einem der vorhergehenden Ansprüche,
**dadurch gekennzeichnet,**
**dass** die Steuermittel (15), insbesondere ausschließlich, bei Erkennen einer zulässigen Getränkesubstratkapsel (5) mindestens eine der Funktionseinheiten ansteuernd ausgebildet sind, insbesondere einen Injektionsprozess in Abhängigkeit des Erkennens einer zulässigen Getränkesubstratkapsel startend und/oder Eingabemittel in Abhängigkeit des Erkennens einer zulässigen Getränkesubstratkapsel zum Empfangen eines Bezugsbefehls freigebend ausgebildet sind.

5. Getränkezubereitungsvorrichtung nach einem der vorhergehenden Ansprüche,
**dadurch gekennzeichnet,**
**dass** die Sensormittel (14) einen ersten und mindestens einen zweiten Sensor umfassen, wobei der erste Sensor ausgebildet und angeordnet ist, um das Vorhandensein einer Getränkesubstratkapsel (5) in der Injektionskammer (3) zu detektieren und bei Detektion ein Sensorsignal auszugeben und dass der zweite Sensor ausgebildet und angeordnet ist das Erfüllen des mindestens einen Kapselgeometrieparameters zu prüfen und bei Erfüllen des Kapselgeometrieparameters ein zweites Sensorsignal auszugeben, wobei vorzugsweise der zweite Sensor aufgrund seiner Ausbildung und Anordnung beim Schließen der Injektionskammer (3) nur bei Erfüllen des Kapselgeometrieparameters durch unmittelbare oder mittelbare Wechselwirkung mit der Getränkesubstratkapsel (5) betätigbar und/oder auslösbar ist.

6. Getränkezubereitungsvorrichtung nach einem der vorhergehenden Ansprüche,
**dadurch gekennzeichnet,**
**dass** die Sensormittel (14) einen Mehrfachbetätigungs- Sensor, insbesondere einen Schalter, bevorzugt einen Mikroschalter, umfassen der, bevorzugt beim Schließen der Injektionskammer (3), durch unmittelbare oder mittelbare Wechselwirkung mit einer Getränkesubstratkapsel (5) in Abhängigkeit des Erfüllens oder nicht Erfüllens der Getränkesubstratkapsellänge unterschiedlich oft betätigbar ist.

7. Getränkezubereitungsvorrichtung nach Anspruch 6,
**dadurch gekennzeichnet,**
**dass** die Steuermittel Zählmittel umfassen mit denen, insbesondere bei einem Injektionskammerschließvorgang, die Anzahl der Betätigungen des Mehrfachbetätigungs-Sensors zählbar sind und dass die Steuermittel in Abhängigkeit der Anzahl der Betätigungen eine zulässige oder unzulässige Getränkesubstratkapsel (5) erkennend ausgebildet sind.

8. Getränkezubereitungsvorrichtung nach Anspruch 1,
**dadurch gekennzeichnet,**
**dass** dem Schaltnockenelement (12) Abtastmittel (13), insbesondere ein, bevorzugt entgegen der Federkraft einer Rückstellfeder auslenkbarer oder zwangsgeführter Abtastschwenkarm, zum Zusammenwirken mit den Sensormitteln (14) in Abhängigkeit einer Auslenkposition des Schaltnockenelementes oder der Abtastmittel (13) zugeordnet sind.

9. Getränkezubereitungsvorrichtung nach einem der vorhergehenden Ansprüche,
**dadurch gekennzeichnet,**
**dass** die Detektionsmittel (15) ein in der Injektionskammer (3) angeordnetes Anschlagelement, insbesondere ein Injektionskammerboden, angeordnet umfassen, das in Abhängigkeit des Erfüllens oder nicht Erfüllens der Getränkesubstratkapsellänge unterschiedlich weit auslenkbar, insbesondere entlang einer Verstellachse des zweiten Injektionskammerteils (6) translatorisch verschiebbar ist zur mittelbaren oder unmittelbaren Wechselwirkung mit den Sensormitteln (14).

10. System, umfassend eine Getränkezubereitungsvorrichtung (1) nach einem der vorhergehenden Ansprüche und eine mindestens eine zulässige, eine vorgegebene Getränkesubstratkapsellänge erfüllende Getränkesubstratkapsel (5) und/oder eine unzulässige, die Getränkesubstratkapsellänge nicht erfüllende Getränkesubstratkapsel (5).

11. Verfahren zum Betreiben einer Getränkezubereitungsvorrichtung (1) zum Herstellen von Getränken aus Getränkesubstratkapseln (5) nach einem der vorhergehenden Ansprüche, mit mehreren Funktionseinheiten, umfassend eine Wasserversorgungsmittel aufweisende Injektionseinrichtung (2) zum Injizieren von Wasser in eine Getränkesubstratkapsel (5) zur Getränkeerzeugung, wobei die Injektionseinrichtung (2) eine Injektionskammer (3) mit einem ersten Injektionskammerteil (7) und einem zum Öffnen und Schließen der Injektionskammer (3) relativ zu dem ersten Injektionskammerteil (7) verstellbaren zweiten Injektionskammerteil (6) aufweist, wobei der Injektionskammer (3) signalleitend mit Steuermitteln zum Ansteuern zumindest einer der Funktionseinheiten verbundene Sensormittel (14) umfassende Detektionsmittel (15) zugeordnet sind, mit denen detektiert wird, ob sich in der, bevorzugt geschlossenen, Injektionskammer (3) eine Getränkesubstratkapsel (5) befindet oder nicht, wobei von den Steuermitteln durch Zusammenwirken mit den Detektionsmitteln (15) festgestellt wird, ob es sich bei der in der Injektionskammer (3) befindlichen Getränkesubstratkapsel (5) um eine zulässige eine vorgegebene Getränkesubstratkapsellänge erfüllende Getränkesubstratkapsel (5) oder eine unzulässige, die Getränkesubstratkapsellänge nicht erfüllende Getränkesubstratkapsel (5) handelt,
**dadurch gekennzeichnet,**
**dass** die Detektionsmittel (15) ein Schaltnockenelement (12) umfassen, wobei in Abhängigkeit des Erfüllens oder nicht Erfüllens der Getränkesubstratkapsellänge das Schaltnockenelement (12) zur mittelbaren oder unmittelbaren Wechselwirkung mit den Sensormitteln (14) unterschiedlich weit ausgelenkt wird und/oder dass die Sensormittel (14) in Abhängigkeit des Erfüllens oder nicht Erfüllens der Getränkesubstratkapsellänge unterschiedlich weit relativ zu einem, bevorzugt ortsfesten, Schaltnockenelement (12) zur mittelbaren oder unmittelbaren Wechselwirkung mit dem Schaltnockenelement (12) ausgelenkt werden.

12. Verfahren nach Anspruch 11,
**dadurch gekennzeichnet,**
**dass** die Steuermittel bei Erkennen einer unzulässigen Getränkesubstratkapsel Eingabemittel zum Verhindern einer wirksamen Bezugsbefehleingabe sperren und/oder Signalisierungsmittel zur Signalisierung einer unzulässigen Getränkesubstratkapsel ansteuern und/oder einen fakultativen Stellmotor zum automatischen Öffnen der Injektionskammer (2) und/oder zum automatischen Auswerfen der unzulässigen Getränkesubstratkapsel ansteuern.

13. Verfahren nach einem der Ansprüche 11 oder 12,
**dadurch gekennzeichnet,**
**dass** die Steuermittel, insbesondere ausschließlich, bei Erkennen einer zulässigen Getränkesubstratkapsel Eingabemittel zur Eingabe eines wirksamen Bezugsbefehls freigeben und/oder einen Injektionsprozess, insbesondere durch Ansteuerung der Wasserversorgungsmittel starten.

## Claims

1. A beverage preparation device for preparing beverages from beverage substrate capsules (5), comprising several functional units, comprising an injection device (2) comprising water supply means and serving to inject water into a beverage substrate capsule (5) for the beverage preparation, said injection device (2) comprising an injection chamber (3) having a first injection chamber part (7) and a second injection chamber part (6) which is adjustable relative to the first injection chamber part (7) for opening and closing the injection chamber (3), detection means (15) being assigned to the injection chamber (3), said detection means (15) comprising sensor means (14) connected to control means in a signal-conducting manner, said control means serving to control at least one of the functional units, said detection means (15) preferably being disposed at least in sections in the injection chamber (3), more preferably being disposed in the first injection chamber part (7) and being used for detecting whether or not a beverage substrate capsule (5) is disposed in the, preferably closed, injection chamber (3), said detection means (15) interacting with the control means and being designed such that they serve to differentiate between an admissible beverage substrate capsule (5) having a predetermined beverage substrate capsule length and an inadmissible beverage substrate capsule (5) not having a predetermined beverage substrate capsule length and being located in the injection chamber (3),
**characterized in that**
the detection means (15) comprise a switch cam element (12) for the direct or indirect interaction with the sensor means (14), said switch cam element (12) being deflectable in varying degrees depending on the compliance or non-compliance with the beverage substrate capsule length, and/or that the sensor means (14) are deflectable in varying degrees relative to a, preferably stationary, switch cam element (12) for the direct or indirect interaction with the switch cam element (12) depending on the compliance or non-compliance with the beverage substrate capsule length.

2. The beverage preparation device according to claim 1,
**characterized in that**
the control means are designed so as to recognize a beverage substrate capsule (5) as inadmissible if the control means do not receive a clearance sensor signal from the sensor means (14) within a predetermined time span and/or if a specified number of signals from the sensor means is counted.

3. The beverage preparation device according to one of the claims 1 or 2,
**characterized in that**
the control means are designed so as to control at least one of the functional units depending on the identification of an inadmissible beverage substrate capsule, in particular designed so as to control signaling means for signaling an inadmissible beverage substrate capsule and/or to control automatic opening means for automatically opening the injection chamber (3) and/or so as to control ejection means for automatically ejecting the inadmissible beverage substrate capsule (5) and/or so as to lock the input means in order to prevent an effective supply command input.

4. The beverage preparation device according to one of the preceding claims,
**characterized in that**
the control means are designed so as to control at least one of the functional units, in particular exclusively, upon identifying an admissible beverage substrate capsule (5), in particular designed so as to initiate an injection process depending on the identification of an admissible beverage substrate capsule and/or so as to unlock input means for receiving a supply command depending on the identification of an admissible beverage substrate capsule.

5. The beverage preparation device according to one of the preceding claims,
**characterized in that**
the sensor means (14) comprise a first and at least a second sensor, said first sensor being designed and disposed so as to detect the presence of a beverage substrate capsule (5) in the injection chamber (3) and to emit a sensor signal upon detection, and that the second sensor is designed and disposed so as to verify the compliance with the at least one capsule geometry parameter and to emit a second sensor signal in case of compliance with the capsule geometry parameter, said second sensor preferably being capable of being actuated and/or triggered due to its design and arrangement when closing the injection chamber (3) by direct or indirect interaction with the beverage substrate capsule (5) only if the capsule geometry parameter is being complied with.

6. The beverage preparation device according to one of the preceding claims,
**characterized in that**
the sensor means (14) comprise a multi-actuation sensor, in particular a switch, in particular a microswitch, which can be activated a different number of times via direct or indirect interaction with a beverage substrate capsule (5) depending on the compliance or non-compliance with the beverage substrate capsule length, preferably upon closing the injection chamber (3).

7. The beverage preparation device according to claim 6,
**characterized in that**
the control means comprise counting means for counting the number of times the multi-actuation sensor is activated, in particular during an injection chamber closing process, and that the control means are designed so as to identify an admissible or inadmissible beverage substrate capsule (5) depending on the number of actuations.

8. The beverage preparation device according to claim 1,
**characterized in that**
the switch cam element (12) is provided with scanning means (13), in particular a scanning arm, preferably being deflectable against the spring force of a return spring or forcibly guided, for interacting with the sensor means (14) depending on a deflection position of the switch cam element or the scanning means (13).

9. The beverage preparation device according to one of the preceding claims,
**characterized in that**
the detection means (15) comprise an abutment element, in particular an injection chamber base, disposed in the injection chamber (3), said abutment element being deflectable in varying degrees, in particular being translationally movable along an adjustment axis of the second injection chamber part (6), for the direct or indirect interaction with the sensor means (14) depending on the compliance or non-compliance with the beverage substrate capsule length.

10. A system comprising a beverage preparation device (1) according to one of the preceding claims and at least one beverage substrate capsule (5) in compliance with an admissible predetermined beverage substrate capsule length and/or an inadmissible beverage substrate capsule (5) not in compliance with the beverage substrate capsule length.

11. A method for operating a beverage preparation device (1) for preparing beverages from beverage substrate capsules (5) according to one of the preceding claims, comprising several functional units, comprising an injection device (2) comprising water supply means and serving for injecting water into a beverage substrate capsule (5) for the beverage preparation, said injection device (2) comprising an injection chamber (3) having a first injection chamber part (7) and a second injection chamber part (6) which is adjustable relative to the first injection chamber part (7) for opening and closing the injection chamber (3), detection means (15) being assigned to the injection chamber (3), said detection means (15) comprising sensor means (14) connected to control means in a signal-conducting manner, said control means serving to control at least one of the functional units, said detection means (15) being used for detecting whether or not a beverage substrate capsule (5) is disposed in the, preferably closed, injection chamber (3), said control means detecting in interaction with the detection means (15) whether the beverage substrate capsule (5) disposed in the injection chamber (3) is an admissible beverage substrate capsule (5) in compliance with a predetermined beverage substrate capsule length or an inadmissible beverage substrate capsule (5) not in compliance with a predetermined beverage substrate capsule length,
**characterized in that**
the detection means (15) comprise a switch cam element (12) which is deflected in varying degrees for the direct or indirect interaction with the sensor means (14) depending on the compliance or non-compliance with the beverage substrate capsule length, and/or that the sensor means (14) are deflected in varying degrees relative to a, preferably stationary, switch cam element (12) for the direct or indirect interaction with the switch cam element (12) depending on the compliance or non-compliance with the beverage substrate capsule length.

12. The method according to claim 11,
**characterized in that**
the control means lock input means upon identifying an inadmissible beverage substrate capsule in order to prevent an effective supply command input and/or control signaling means for signaling an inadmissible beverage substrate capsule and/or control a facultative servomotor for automatically opening the injection chamber (3) and/or for automatically ejecting the inadmissible beverage substrate capsule.

13. The method according to one of the claims 11 or 12,
**characterized in that**
the control means unlock input means for entering an effective supply command, in particular exclusively, upon identifying an admissible beverage substrate capsule and/or initiate an injection process, in particular by controlling the water supply means.

## Revendications

1. Dispositif à préparation des boissons pour préparer des boissons à la base des capsules de substrat de boisson (5), ayant plusieurs unités fonctionnelles, comprenant un dispositif d'injection (2) comprenant des moyens d'alimentation en eau et servant à injecter de l'eau dans une capsule de substrat de boisson (5) pour la génération des boissons, ledit dispositif à injection (2) comprenant une chambre d'injection (3) ayant une première partie de chambre d'injection (7) et une deuxième partie de chambre d'injection (6) pouvant être déplacée relativement à la première partie de chambre d'injection (7) et servant à ouvrir et fermer la chambre d'injection (3), des moyens de détection (15) étant associés à ladite chambre d'injection (3), lesdits moyens de détection (15) comprenant des moyens de capteur (14) reliés aux moyens de commande de manière à conduire un signal, lesdits moyens de commande servant à commander au moins une des unités fonctionnelles, lesdits moyens de détection (15) étant disposés de préférence au moins en parties dans la chambre d'injection (3), d'une plus grande préférence étant disposés dans la première partie de chambre d'injection (7) et étant utilisé pour détecter si une capsule de substrat de boisson (5) se trouve dans la chambre d'injection (3), de préférence fermée, ou pas, lesdits moyens de détection (15) étant réalisés et interagissant avec les moyens de commande de telle manière qu'ils peuvent différencier entre une capsule de substrat de boisson (5) autorisée et conforme à la longueur de la capsule de substrat de boisson prédéterminée et une capsule de substrat de boisson (5) non autorisée, disposée dans la chambre d'injection (3) et pas conforme à la longueur de la capsule de substrat de boisson (5),
**caractérisé en ce que**
les moyens de détection (15) comprennent un élément de came de contact (12), qui peut être dévié à divers degrés en fonction de conformité avec la longueur de la capsule de substrat de boisson ou pas et sert à l'interaction directe ou indirecte avec les moyens de capteur (14) et/ou que les moyens de capteur (14) peuvent être dévié à divers degrés relativement à un élément de came de contact (12), de préférence fixe, en fonction de conformité avec la longueur de la capsule de substrat de boisson ou pas pour l'interaction directe ou indirecte avec l'élément de came de contact.

2. Dispositif à préparation des boissons selon la revendication 1,
**caractérisé en ce que**
les moyens de commande sont réalisés en détectant une capsule de substrat de boisson (5) comme non autorisée quand les moyens de commande ne reçoivent pas de signal de capteur de déverrouillage des moyens de capteur (14) pendant un laps de temps prédéterminé et/ou un nombre certain de signaux de capteurs est compté.

3. Dispositif à préparation des boissons selon l'une quelconque des revendications 1 ou 2,
**caractérisé en ce que**
les moyens de commande sont réalisés pour commander au moins une des unités fonctionnelles en fonction de détection d'une capsule de substrat de boisson (5) non autorisée, en particulier réalisés pour commander des moyens de signalisation pour la signalisation d'une capsule de substrat de boisson (5) fausse et/ou pour commander des moyens d'ouverture automatiques pour l'ouverture automatique de la chambre d'injection (3) et/ou pour commander des moyens d'éjection pour l'éjection automatique de la capsule de substrat de boisson (5) non autorisée et/ou réalisés pour bloquer les moyens d'entrée pour empêcher une entrée de commande de fourniture effective.

4. Dispositif à préparation des boissons selon l'une quelconque des revendications précédentes,
**caractérisé en ce que**
les moyens de détection sont réalisés pour commander au moins une des unités fonctionnelles, en particulier uniquement, lors de l'identification d'une capsule de substrat de boisson (5) autorisée, en particulier réalisés pour initier un procédé d'injection en fonction de l'identification d'une capsule de substrat de boisson autorisée et/ou réalisés pour déverrouiller des moyens d'entrée réalisés en fonction de l'identification d'une capsule de substrat de boisson autorisée pour qu'une commande de fourniture est reçue.

5. Dispositif à préparation des boissons selon l'une quelconque des revendications précédentes,
**caractérisé en ce que**
les moyens de capteur (14) comprennent un premier et au moins un deuxième capteur, ledit premier capteur étant réalisé et disposé pour détecter la présence d'une capsule de substrat de boisson (5) dans la chambre d'injection (3) et pour émettre un signal de capteur en cas de détection, et que le deuxième capteur est réalisé et disposé pour vérifier la conformité de l'au moins un paramètre de la géométrie de capsules et pour émettre un deuxième signal de capteur lors de la conformité du paramètre de géométrie de capsules, dans lequel de préférence ledit deuxième capteur ne peut être mis en action et/ou déclenché que lors de la conformité du paramètre de géométrie de capsules par l'interaction directe ou indirecte avec la capsule de substrat de boisson (5) du fait de sa formation et sa disposition lors de la fermeture de la chambre d'injection (3).

6. Dispositif à préparation des boissons selon l'une quelconque des revendications précédentes,
**caractérisé en ce que**
les moyens de capteur (14) comprennent un capteur à mise en action multiple, en particulier un interrupteur, de préférence un microrupteur, qui peut être mis en action à des fréquences différentes, de préférence lors de la fermeture de la chambre d'injection (3), par l'interaction directe ou indirecte avec une capsule de substrat de boisson (5) en fonction de la conformité ou non-conformité de la longueur de capsule de substrat de boisson.

7. Dispositif à préparation des boissons selon la revendication 6,
**caractérisé en ce que**
les moyens de commande comprennent des moyens de comptage avec lesquels, en particulier lors d'un procédé de fermeture de la chambre d'injection, le nombre de mises en action du capteur à mises en action multiples sont comptables et que les moyens de commande sont réalisés pour détecter une capsule de substrat de boisson (5) autorisée ou non autorisée en fonction du nombre de mises en action.

8. Dispositif à préparation des boissons selon la revendication 1,
**caractérisé en ce que**
des moyens de balayage (13), en particulier un bras oscillant d'échantillonnage, de préférence étant guidé forcément ou pouvant être dévié contrairement à la force du ressort d'un ressort de rappel, sont associés à l'élément de came de contact (12) pour interagir avec les moyens de capteur (14) en fonction d'une position de déviation de l'élément de came de contact ou des moyens de balayage (13).

9. Dispositif à préparation des boissons selon l'une quelconque des revendications précédentes,
**caractérisé en ce que**
les moyens de détection (15) comprennent un élément de butée, en particulier un fond de la chambre d'injection, disposé dans la chambre d'injection (3), ledit élément de butée pouvant être dévié à des divers degrés, en particulier pouvant être déplacé le long d'un axe de déplacement de la deuxième partie de chambre d'injection (6) de manière translationnelle, en fonction de la conformité ou de la non-conformité de la longueur de la capsule du substrat de boisson pour l'interaction directe ou indirecte avec les moyens de capteur (14).

10. Système, comprenant un dispositif à préparation des boissons (1) selon l'une quelconque des revendications précédentes et au moins une capsule de substrat à boisson (5) autorisée et conforme à une longueur de capsule de substrat à boisson prédéterminée et/ou une capsule de substrat de boisson (5) non autorisée et pas conforme à la longueur de capsule de substrat de boisson.

11. Procédé pour le fonctionnement d'un dispositif à préparation des boissons (1) pour préparer des boissons à la base de capsules de substrat de boisson (5) selon l'une quelconque des revendications précédentes, ayant plusieurs unités fonctionnelles, comprenant un dispositif d'injection (2) comprenant des moyens d'alimentation en eau et servant à injecter de l'eau dans une capsule de substrat de boisson (5) pour la préparation des boissons, ledit dispositif d'injection (2) comprenant une chambre d'injection (3) ayant une première partie de chambre d'injection (7) et une deuxième partie de chambre d'injection (6) pouvant être ajustée relativement à la première partie de chambre d'injection et servant à ouvrir et fermer la chambre d'injection (3), des moyens de détection (15) étant associés à ladite chambre d'injection (3), lesdits moyens de détection (15) comprenant des moyens de capteur (14) reliés à des moyens de commande d'une manière à conduire un signal, lesdits moyens de commande servant à commander au moins une des unités fonctionnelles, lesdits moyens de détection (15) servant à détecter si une capsule de substrat de boisson (5) se trouve dans la chambre d'injection (3), de préférence fermée, ou pas, lesdits moyens de commande détectant, en interaction avec les moyens de détection (15), si la capsule de substrat de boisson (5) disposée dans la chambre d'injection (3) est une capsule de substrat de boisson (5) autorisée et conforme à une longueur de capsule de substrat de boisson ou une capsule de substrat de boisson (5) non autorisée et pas conforme à la longueur de capsule de substrat de boisson,
**caractérisé en ce que**
les moyens de détection (15) comprennent un élément de came de contact (12) qui est dévié à des divers degrés en fonction de la conformité ou la non-conformité de la longueur de capsule de substrat de boisson de pour l'interaction directe ou indirecte avec les moyens de capteur (14) et/ou que les moyens de capteur (14) sont déviés à des divers degrés relativement à un élément de came de contact (12), de préférence fixe, en fonction de la conformité ou la non-conformité de la longueur de capsule de substrat de boisson pour l'interaction directe ou indirecte avec l'élément de came de contact (12).

12. Procédé selon la revendication 11,
**caractérisé en ce que**
les moyens de commande bloquent des moyens d'entrée lors de l'identification d'une capsule de substrat de boisson non autorisée pour empêcher d'une entrée de commande de fourniture effective et/ou commandent des moyens de signalisation pour la signalisation d'une capsule de substrat de boisson non autorisée et/ou commandent un servomoteur facultatif pour l'ouverture automatique de la chambre d'injection (3) et/ou pour l'éjection automatique de la capsule de substrat de boisson non autorisée.

13. Procédé selon l'une des revendications 11 ou 12,
**caractérisé en ce que**
les moyens de commande déclenchent des moyens d'entrée pour l'entrée d'une commande de fourniture effective, en particulier uniquement, lors de l'identification d'une capsule de substrat de boisson autorisée et/ou initient un procédé d'injection, en particulier par la commande des moyens d'alimentation en eau.
